Europäisches Patentamt

European Patent Office

Office européen des brevets

(11) Veröffentlichungsnummer: **0 218 115**
**B1**

(12) **EUROPÄISCHE PATENTSCHRIFT**

(45) Veröffentlichungstag der Patentschrift:
**20.12.89**

(51) Int. Cl.⁴: **A01G 9/14**

(21) Anmeldenummer: **86112509.4**

(22) Anmeldetag: **10.09.86**

(54) Gewächshaus mit doppelter Folienabdeckung.

(30) Priorität: **20.09.85 HU 354185**

(43) Veröffentlichungstag der Anmeldung:
**15.04.87 Patentblatt 87/16**

(45) Bekanntmachung des Hinweises auf die Patenterteilung:
**20.12.89 Patentblatt 89/51**

(84) Benannte Vertragsstaaten:
**AT BE CH DE FR GB IT LI LU NL SE**

(56) Entgegenhaltungen:
**DE-A- 2 802 719**
**DE-A- 3 305 327**
**DE-U- 1 835 440**

(73) Patentinhaber: **Alagi Allami Tangazdaság, Verseny
u. 8-10, H-2120 Dunakeszi(HU)**
Patentinhaber: **Kertészeti Egyetem, Ménesi u. 44,
Budapest XI(HU)**

(72) Erfinder: **Vaskuti, István, Dipl.-Ing., Néphadsereg
u. 30.I/1, Budapest(HU)**
Erfinder: **Manko, Sándor, Váci u.2, Martonvásár(HU)**
Erfinder: **Somos, András, Dr., Györök u. 20, Budapest
XI(HU)**
Erfinder: **Turi, István, Dr. Dipl.-Gartenbauing, Péteri
major, Soroksár(HU)**
Erfinder: **Zatyko, Ferenc, Dr. Dipl.-Gartenbauing.,
1033 Bihari Mór u. 4., Budapest XI(HU)**
Erfinder: **Gyuros, János, Dipl.-Gartenbauing., Szüret
u. 18, Budapest XI(HU)**
Erfinder: **Borsodi, Lászlo, 1116 Fehérvári ut 215.,
Budapest(HU)**

(74) Vertreter: **Patentanwälte Viering & Jentschura,
Steinsdorfstrasse 6, D-8000 München 22(DE)**

## Beschreibung

Die Erfindung betrifft ein Foliengewächshaus mit einem aus longitudinalen geraden Elementen und in der Querrichtung verlaufenden bogenförmig Elementen bestehenden Skelett und einer doppelten Folienabdeckung, zwischen deren Folien ein Wasser zwischen die Folien einsprühendes System vorgesehen ist.

Das Gewächshaus mit doppelter Folienabdeckung und Wasservorhang - das unter dem Namen Hydrosol-Gewächshaus bekannt ist - wird infolge der damit verbundenen Vorteile in immer breiteren Maße verwendet.

Die wesentliche Charakteristik dieser Lösung zeigt sich darin, daß eine auf zwei Metallrahmen angeordnete doppelte Folienabdeckung vorgesehen ist, wobei auf die äußere Oberfläche der inneren Folienabdeckung aus einem, sich entlang des Scheitels des Gewächshauses erstreckenden Rohr Wasser versprüht wird. Das Wasser wird aus dem Erdboden gewonnen; auf diese Weise kann die geothermische Energie des Erdbodens für das Heizen des Gewächshauses verwertet werden. Diese Möglichkeit und die erhöhte Isolierfähigkeit führen zu einer äußerst bedeutenden Energieeinsparung. Das an der Folie abfließende Wasser - dessen Wärmeenergie bereits abgegeben worden ist - wird gesammelt und in den Boden zurückgeführt; so ist die Verbreitung des Gewächshauses mit doppelter Folienbedeckung in weiten Kreisen auf die erwähnte Energieeinsparung zurückzuführen.

Versuche haben gezeigt, daß mit dem unter dem Namen Hydrosol bekannt gewordenen Gewächshaus mit doppelter Folienabdeckung eine Energieeinsparung von ungefähr 66% erreicht werden kann. Die doppelte Folienabdeckung stellt nämlich eine etwa fünffache Wärmeisolierung zwischen der äußeren Umgebung und dem Inneren des Gewächshauses sicher.

Die Wärmeenergie des Erdbodens wird außerordentlich gut verwertet, und zwar dadurch, daß ein bedeutender Anteil der Wärmeenergie des aus dem Erdboden gewonnenen und zwischen die Folien der doppelten Folienabdekkung eingesprühten Wassers der innenliegenden Folie und so der Luft im Inneren des Gewächshauses übergeben wird. Durch die doppelte Folienabdekkung kann die erhöhte Nutzbarmachung der solaren Energie erreicht werden.

Das Wasser wird, nachdem es einen Teil seiner Energie abgeben hat, in den Erdboden zurückgeführt, wo es wiederholt die Bodentemperatur aufnimmt und so wiederverwendet werden kann. Das erfindungsgemäße Gewächshaus bietet selbstverständlich die Möglichkeit, Abfallenergie verwerten zu können, indem Kühlwasser oder sonstiges Wasser, dessen Temperatur zu Heizzwecken noch nicht reicht, zwischen die Folien eingesprüht wird. Aufgrund der erwähnten Vorteile wird dieser Typ des Gewächshauses immer häufiger geplant und verwendet.

Die bisher bekannten Gewächshäuser mit doppelter Folienabdeckung weisen jedoch hinsichtlich der Technik und Wirtschaftlichkeit gewisse Nachteile auf. Einerseits ist die doppelte Rahmenkonstruktion ziemlich kostenaufwendig, wodurch in gewissen Fällen die Anwendung fraglich wird. Das Aufbauen des auf den Doppelrahmen montierten Gewächshauses ist weitgehend langwierig und zeitaufwendig.

Ein weiterer nicht vernachlässigbarer Mangel des bekannten Gewächshauses mit Doppel-Folienabdeckung besteht darin, daß beide Folienmäntel, insbesondere der äußere, unmittelbar auf die Rahmenkonstruktion aufgespannt werden, wodurch die Abdeckung ständig unterschiedlichen mechanischen Einwirkungen und Sonnenstrahlung ausgesetzt ist.

Es ist eine wohlbekannte Tatsache, daß die Rahmenkonstruktion und die Folie bei Wind voneinander unabhängige Bewegungen ausführen; aber eine voneinander unabhängige Bewegung findet auch statt, wenn die Temperatur schwankt, da die Wärmeausdehnungskoeffizienten verschieden sind. Durch die relative Bewegung zwischen Folie und Rahmenkonstruktion entsteht eine konstante Reibung an der Folie. Aus der Temperaturänderung folgt weiterhin die Erscheinung, daß die Folie in Abhängigkeit vom Wetter unterschiedlich an der Rahmenkonstruktion ausgespannt ist, da keine Möglichkeit für ein temperaturabhängiges Nachspannen oder Lockern besteht. Unter Winddruck hingegen gelangt die eine Seite der Folienabdeckung unter Druck, während an der anderen Seite eine Saugwirkung auftritt, gleichzeitig aber ist die Rahmenkonstruktion selbst keinesfalls in diesem Maße der Windwirkung ausgesetzt.

Eine weitere schädliche Wirkung, die aus der Verbindung zwischen Folie und Rahmenkonstruktion entsteht, kommt als Folge der Sonnenstrahlung zustande. Die Sonne erwärmt sowohl die Rahmenkonstruktion als auch die Folie; durch die Erwärmung der Rahmenkonstruktion wird aber die Folie zerstört. An den Berührungsstreifen wird das Foliengefüge beschädigt, wodurch die Folien an den Berührungsstellen früher oder später reißen.

Der Erfindung wurde das Ziel gesetzt, die oben erwähnten Nachteile zu beseitigen und ein Gewächshaus mit doppelter Folienabdeckung zu schaffen, bei dem die vorteilhaften Charakteristiken der bekannten Lösungen beibehalten, aber die Nachteile beseitigt sind. Die Lösung soll unaufwendig sein und die Abstützung der äußeren Folienabdeckung soll schonend sein, wodurch die Lebensdauer der Folien verlängert wird.

Die Erfindung beruht insbesondere auf der Erkenntnis, daß das gesetzte Ziel erreicht werden kann, wenn nur eine einzige Rahmenkonstruktion verwendet wird und die innere Folie auf diese aufgelegt wird, während die äußere Folie auf an der inneren Folie anliegenden Luftpolstern angeordnet wird.

Demnach bezieht sich die Erfindung auf ein Folien-Gewächshaus, das einen aus longitudinalen geraden Elementen und in Querrichtung verlaufenden bogenförmigen Elementen bestehenden Rahmen und eine doppelte Folienabdeckung aufweist, zwischen deren Folien ein zwischen diese Wasser einsprühendes System vorgesehen ist.

Die Erfindung liegt insbesondere darin, daß an der auf dem einzigen Metallrahmen anliegenden inneren Folienabdeckung, entlang der in Querrichtung verlaufenden bogenförmigem Rahmenelementen aufblasbare Luftpolster jeweils in Form eines Schlauches angeordnet sind und die zweite, d.h. die äußere Folienschicht auf diese Luftpolster aufgelegt ist, die mit einer Druckluftwelle mit einstellbarem Druck verbunden sind.

Auf diese Weise steht die äußere Folienabdeckung im Sinne der Erfindung nicht mit einem steifen Metallrahmen in Berührung, sondern mit einem aus dem gleichen Grundstoff wie sie selbst gefertigten Luftpolster, wodurch die aus der relativen Bewegung entstehende Reibwirkung und die schädliche Wirkung der Sonneneinstrahlung beseitigt werden. Auch das Folienzelt kann viel einfacher aufgestellt werden.

Die erfindungsgemäße vorgesehene Druckluftquelle mit einstellbarem Druck weist eine Luftpumpe, vorzugsweise eine Aquariumpumpe auf, die mit Hilfe eines Dreiweg-Verteilers einerseits mit dem Luftpolster, andererseits mit einem Tauchrohr - das in ein mit Wasser aufgefülltes Gefäß hineinragt - verbunden ist.

Die Höhe zwischen dem unteren Ende des Tauchrohrs und dem Wasserspiegel - die eingestellt werden kann - bestimmt den konstanten Druck, der mit der Luftpumpe in den Luftpolstern aufrechterhalten wird.

Erfindungsgemäß kann das Gewächshaus so vereinfacht werden, daß das den Scheitel des Metallrahmens des Gewächshauses bildende longitudinale Rahmenelement ein Rohr ist, das als Wasserförderrohr funktioniert, und an dem Rohr die die innere Folienabdeckung durchdringenden Sprühdüsen angeordnet sind. Auf diese Weise ist das Einsprühen des Wassers zwischen die doppelte Folienabdeckung äußerst einfach gelöst.

An den unteren Rändern der doppelten Folienabdeckung ist ein Wassersammelkanal ausgebildet, dem die Aufgabe zugeteilt wird, das an der inneren Folie abfließende Wasser zu sammeln und in den Boden zurückzuführen.

Die Erfindung wird anhand eines vorteilhaften Ausführungsbeispiels näher erläutert, wobei

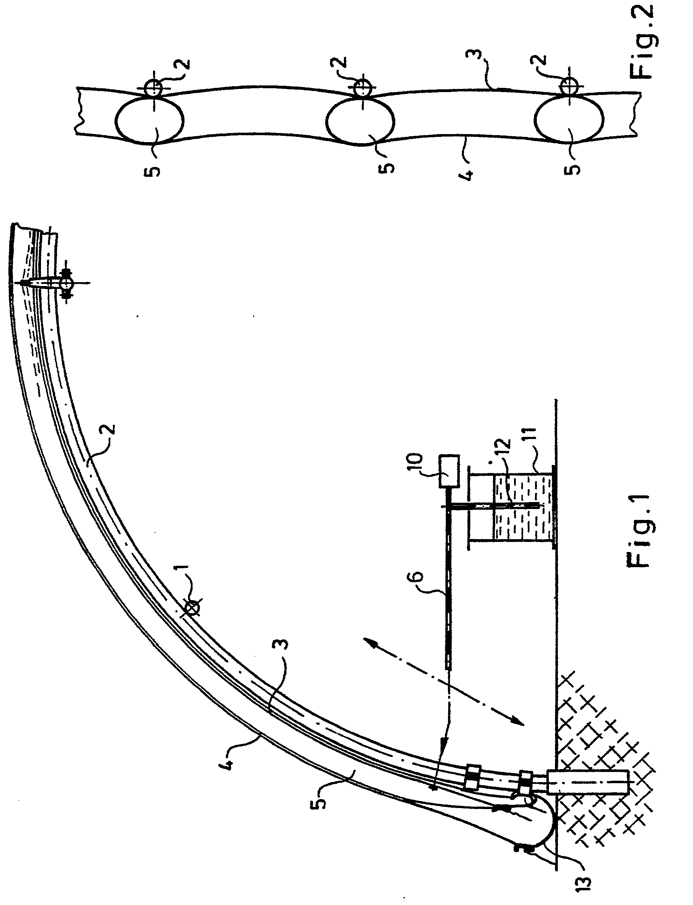

Figur 1 den Schnitt eines Teils des erfindungsgemäßen Gewächshauses dargestellt.
Figur 2 den Querschnitt entlang der Linie A-A der Figur 1,

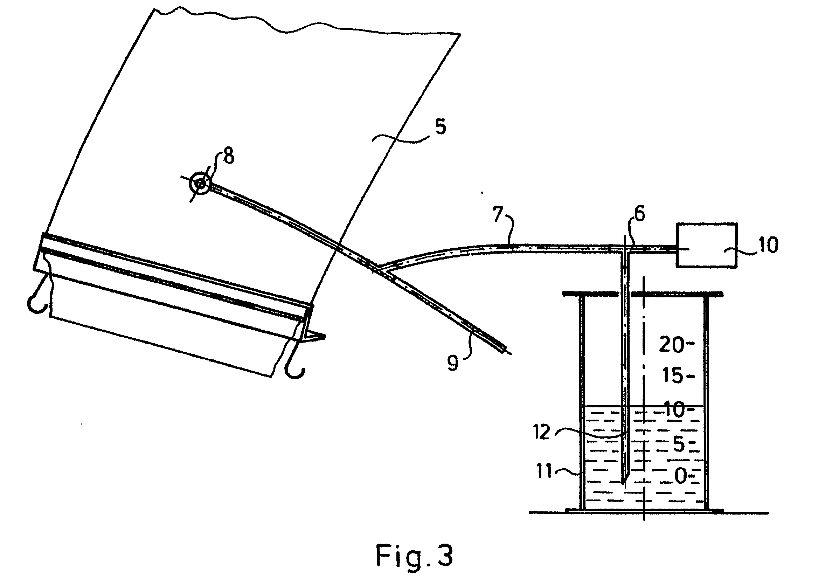

Figur 3 die Luftdruckquelle in einem vergrößertem Maßstab veranschaulicht, und
Figur 4 die an dem Wasserförderrohr angeordnete und die innere Folie durchquerende Sprühdüse darstellt.

Wie es aus der Zeichnung ersichtlich ist, besteht der Rahmen des Gewächshauses mit der doppelten Folienabdeckung aus in vorbestimmten gegenseitigem Abstand angeordneten bogenförmigen Elementen 2, sowie aus geraden longitudinalen Elementen 1, die in dem Ausführungsbeispiel aus Rohren gebildet sind. Die bogenförmigen Elemente 2 und die longitudinalen geraden Elemente 1 sind aneinander befestigt.

Die bogenförmigen Elemente 2 sind in hier nicht detaillierter Weise in den Erdboden fundamentiert. Auf die aus den Elementen 1, 2 zusammengestellte Rahmenkonstruktion ist eine innere Folienabdeckung 3 aufgelegt, die unten sowie an den Stirnwänden in hier nicht geschilderter Weise befestigt ist, und zwar so, daß die Befestigung zur erforderlichen Spannung der Folie eingestellt werden kann.

Im Sinne der Erfindung sind entlang der bodenförmigen Elemente 2 Luftpolster 5 an der inneren Folienabdeckung 3 angeordnet, die mit der Druckluftquelle in Verbindung stehen. Die Luftpolster 5 sind jeweils in Form eines langgestreckten Schlauches ausgebildet.

Die Druckluftquelle besteht aus einer Luftpumpe 10 - die im Ausführungsbeispiel eine Aquariumpumpe ist -, die über einen Verteiler 6, ein Rohr 7 und Verteilerleitungen 9, sowie Ventile 8 einerseits mit den Luftpolstern 5, andererseits über ein Tauchrohr 12 mit einem Gefäß 11 in Verbindung steht, und zwar in der Weise, daß das Tauchrohr 12 in das in das Gefäß 11 eingefüllte Wasser eintaucht. Der Wasserspiegel des Gefäßes 11 kann geändert werden, oder es besteht die Möglichkeit die Eintauchtiefe des Tauchrohrs 12 zu ändern, wodurch die Höhe zwischen dem Wasserspiegel und dem unteren Ende des Tauchrohrs 12 geregelt werden kann, da eigentlich die Wassersäulenhöhe den Druck, den die Aquariumpumpe 10 in den Luftpolstern 5 aufrechterhält, bestimmt.

Auf die Luftpolster 5 wird die äußere Folienabdeckung 4 aufgelegt, die in hier nicht geschilderter Weise entlang des unteren Randes und der Stirnwände mit veränderlicher Spannung befestigt ist. Zwischen den Folienabdeckungen 3, 4 ist entlang der unteren Ränder derselben der Wassersammelkanal 13 mit entsprechendem Gefälle angeordnet.

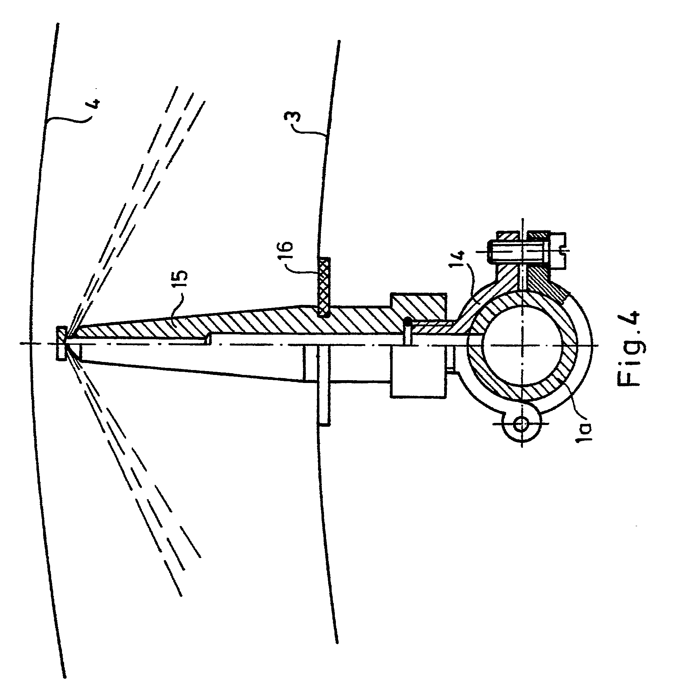

Im Sinne der Erfindung erfüllt das den oberen Scheitel des Gewächshauses bildende, in Längsrichtung sich erstreckende Rohr 1a auch die Funktion der Wasserverteilung. An dem erwähnten Rohr 1a sind - wie aus Figur 4 ersichtlich - jeweils zwischen zwei benachbarten Schläuchen 5 eine oder mehrere Sprühdüsen 15 mit Rohrschellen 14 befestigt. Die Sprühdüsen durchdringen die innere Folienabdeckung 3, wobei die Folienabdeckung 3 auf an den Sprühdüsen 13 befestigten Gummiunterlagen 16 aufliegt. In der Figur 4 ist auch die auf den Luftpolstern 5 abgestützte äußere Folienabdeckung 4 dargestellt.

Das Errichten des erfindungsgemäßen Gewächshauses beginnt mit dem Aufbau der Rahmenkonstruktion. Danach wird die innere Folienabdeckung auf die Rahmenkonstruktion mit entsprechender Spannung aufgespannt. In dem nächsten Arbeitsgang werden die Luftpolster 5 entlang der in der Querrichtung verlaufenden bogenförmigen Elemente aufgesetzt, und zwar in der Weise, daß die bogenförmigen Elemente in der Mittellinie der erwähnten Luftpolster liegen.

Auf die Luftpolster wird nun die äußere Folienabdeckung aufgelegt und nach Erfordernis ausgespannt. Darauffolgend wird die Druckluftquelle mit den Luftpolstern 5 verbunden; mit der Druckluftquelle wird der erforderliche, in den Luftpolstern aufrechtzuerhaltene Druck eingestellt.

Durch Anlassen der Luftpumpe 10 werden die Luftpolster 5 aufgeblasen, wo durch das Gewächshaus in Betriebsbereitschaft gelangt. Nachdem die Pumpe angelassen wurde, kann das Wasser zwischen die beiden Folienabdeckungen eingesprüht werden.

Die mit Luft aufgefüllten Luftpolster halten die äußere Folienabdeckung ständig in gespanntem Zustand, wodurch die statische Festigkeit der Konstruktion erreicht wird. Die äußere Folie kommt nicht in unmittelbare Berührung mit der Rahmenkonstruktion, die Berührung besteht im wesentlichen mit dem Luftpolster. Die Luftpolster behalten die äußere Folie in konstanter Verspannung, beim Windgang folgen die Luftpolster infolge ihrer Elastizität der Windwirkung und verringern die Gefahr der Beschädigung der Folienabdeckung. Durch den eingestellten Druck der Luftpumpen ist auch das sich aus der Temperaturschwankung ergebende Schadhaftwerden beseitigt, da die Luft sich besser ausdehnt bzw. zusammenzieht als die Folie, wodurch der Druck in den Luftpolstern einen konstanten Druckwert aufweist und die Folie gespannt bleibt. Auf diese Weise wird die schadhafte Einwirkung der Sonnenstrahlung gleicherweise verringert.

**Patentansprüche**

1. Gewächshaus, das einen aus longitudinalen geraden Elementen (1) und in Querrichtung verlaufenden bogenförmigen Elementen (2) bestehenden Rahmen und eine doppelte Folienabdeckung aufweist, zwischen deren Folien (3, 4) ein Wasser einsprühendes System vorgesehen ist, dadurch gekennzeichnet, daß der auf dem einzigen Metallrahmen (1, 2) aufgelegten inneren Folienabdeckung (3), entlang der in Querrichtung verlaufenden bogenförmigen Rohrrahmenelemente (2) aufblasbare Luftpolster (5) jeweils in Form eines Schlauches angeordnet sind und auf diesen Luftpolstern (5) die zweite, d.h. äußere Folienabdeckung (4) angeordnet ist, wobei die Luftpolster (5) an eine Druckluftquelle (10, 11, 12) mit einstellbarem Druck angeschlossen sind.

2. Gewächshaus nach Anspruch 1, dadurch gekennzeichnet, daß die Druckluftquelle (10, 11, 12) mit dem einstellbarem Druck einen Verteiler (6) aufweist, der mit seinem einen Zweig mit den Luftpolstern (5), mit dem anderen Zweig mit einem in ein mit Wasser aufgefülltes Gefäß (11) entauchenden Tauchrohr (12) und mit dem dritten Zweig mit einer Luftpumpe (10), vorteilhaft einer Aquariumpumpe, verbunden ist, wobei der Abstand zwischen dem unteren Ende des Tauchrohrs (12) und dem Wasserspiegel entweder durch die Änderung des Wasserspiegels oder der Eintauchtiefe des Tauchrohrs einstellbar ist.

3. Gewächshaus nach Anspruch 1 oder 2, dadurch gekennzeichnet, daß das in Längsrichtung verlaufende, den Scheitel des Metallrahmens des Gewächshauses bildende Rohr (1a) als Wasserförderrohr ausgebildet ist und auf demselben die innere Folienabdeckung (3) durchdringende Sprühdüsen (15) angeordnet sind.

4. Gewächshaus nach einem der Ansprüche 1 bis 3, dadurch gekennzeichnet, daß an den unteren Rändern der doppelten Folienbedeckung (3, 4) ein Wassersammelkanal (13) angeordnet ist.

**Claims**

1. Greenhouse comprising a frame of longitudinal straight elements (1) and transversely extending arcuate elements (2), and a double foil cover, between the foils (3, 4) of which a water spraying system is provided, characterized in that inflatable air cushions (5), each in the form of a hose, are arranged on the inner foil cover (3) and along the transversely extending arcuate tube frame elements (2), the inner foil cover (3) being disposed on the single metal frame (1, 2) and the second, i.e. outer, foil cover (4) being disposed on said air cushions (5), wherein the air cushions (5) are connected to a source (10, 11, 12) of compressed air of adjustable pressure.

2. Greenhouse according to claim 1, characterized in that the source (10, 11, 12) of compressed air of adjustable pressure comprises a distributor (6), a first branch of the distributor (6) being connected to the air cushions (5), a second branch being connected to an immersion tube (12) immersed in a vessel (11) filled with water, and a third branch being connected to an air pump (10), advantageously an aquarium pump, wherein the space between the lower end of the immersion tube (12) and the water level is adjustable by altering either the water level or the immersion depth of the immersion tube.

3. Greenhouse according to claim 1 or 2, characterized in that the longitudinal tube (1a) constituting the crown of the metal frame of the greenhouse is in the form of a water feed tube, on which spray nozzles (15) penetrating the inner foil cover (3) are arranged.

4. Greenhouse according to any of claims 1 to 3, characterized in that a water collecting channel (13) is arranged at the lower edges of the double foil cover (3, 4).

**Revendications**

1. Serre comprenant, d'une part, un cadre d'éléments (1) droits longitudinaux et d'éléments (2) voûtés s'étendant transversalement et, d'autre part, une couverture en deux feuilles (3, 4), entre lesquelles un système d'arrosage est pourvu, caractérisée en ce que des coussins pneumatiques (5) gonflables, chacun en forme de tuyau flexible, sont disposés sur la feuille couvrante intérieure (3) le long des éléments de cadre tubulaires (1) voûtés et s'étendant transversalement, la feuille couvrante intérieure (3) étant placée sur le seul cadre métallique (1, 2) et la deuxième feuille couvrante (4), c'est-à-dire la feuille extérieure, reposant sur lesdits coussins pneumatiques (5), ceux-ci étant raccordés à une source d'air comprimé (10, 11, 12) à pression réglable.

2. Serre selon la revendication 1, caractérisée en ce que la source d'air comprimé (10, 11, 12) à pression réglable comprend un distributeur (6), dont une première branche est raccordée aux coussins pneumatiques (5), une deuxième branche est raccordée à un tube plongeur (12) immergé dans un récipient (11) rempli d'eau, et une troisième branche est raccordée à une pompe d'air, avantageusement une pompe d'aquarium, l'espace entre le bout inférieur du tube plongeur (12) et le niveau de l'eau étant réglable par changement soit du niveau de l'eau soit de la profondeur d'immersion du tube plongeur (12).

3. Serre selon la revendication 1 ou 2, caractérisée en ce que le tube longitudinal (1a) constituant le sommet du cadre métallique de la serre est construit en forme de tube d'alimentation d'eau, sur lequel des tuyères (15) traversant la feuille couvrante intérieure (3) sont disposées.

4. Serre selon une des revendications 1 à 3, caractérisée en ce qu'un conduit collecteur d'eau (13) est arrangé aux extrémités inférieures de la couverture en deux feuilles (3, 4).

Fig.1

Fig.2

EP 0 218 115 B1

Fig.3

EP 0 218 115 B1

Fig. 4

EP 0 218 115 B1